# EUROPÄISCHE PATENTANMELDUNG

(11) **EP 3 336 920 A1**
(43) Veröffentlichungstag der Anmeldung: **20.06.2018**
(21) Anmeldenummer: 16203674.3
(22) Anmeldetag: 13.12.2016
(51) Int. Cl.: H01M 2/02, H01M 2/12, H01M 10/42, H01M 10/48

(54) **BATTERIEZELLE MIT EINEM SICHERHEITSVENTIL**

(71) Anmelder: Lithium Energy and Power GmbH & Co. KG, 70469 Stuttgart (DE)
(72) Erfinder: Bender, Johannes, 96049 Bamberg (DE)
(74) Vertreter: Bee, Joachim

(57) **Zusammenfassung**

Die Erfindung betrifft eine Batteriezelle (10), insbesondere Pouchzelle (10), mit einem Zellgehäuse (11) und zumindest einem an einer Öffnung (12) des Zellgehäuses (11) angeordneten Sicherheitsventil (13), wobei das Sicherheitsventil (13) die Öffnung (12) vollflächig verschließt.

## Beschreibung

Die vorliegende Erfindung betrifft eine Batteriezelle gemäß dem Oberbegriff des ersten unabhängigen Patentanspruchs sowie ein Batteriemodul gemäß dem weiteren unabhängigen Patentanspruch.

### Stand der Technik

Aus der US 5,595,835 ist eine Batteriezelle mit einem Sicherheitsventil bekannt. Das Sicherheitsventil ist als eine metallische Abdeckplatte für eine Öffnung des Zellgehäuses ausgebildet und wird mit diesem aufwendig verschweißt.

### Offenbarung der Erfindung

Gemäß einem ersten Aspekt der Erfindung wird eine Batteriezelle, insbesondere eine Pouchzelle, mit einem Zellgehäuse und zumindest einem an einer Öffnung des Zellgehäuses angeordneten Sicherheitsventil beansprucht. Das Sicherheitsventil verschließt dabei die Öffnung des Zellgehäuses vollflächig, sodass die Öffnung vollständig von dem Sicherheitsventil bedeckt ist. Dabei ist das Sicherheitsventil mehrschichtig ausgebildet und weist zumindest eine Klebeschicht auf, wodurch das Sicherheitsventil am Zellgehäuse stoffschlüssig befestigt ist. Das Sicherheitsventil kann dabei als Multilayerfolie ausgebildet sein und weist mehrere Schichten auf, welche sandwichartig zusammengesetzt sein können. Das Sicherheitsventil kann vergleichbar zu einem Pflaster ausgestaltet sein, wobei dieses zumindest eine Klebeschicht aufweist, wodurch das Sicherheitsventil am Zellgehäuse stoffschlüssig befestigt ist. Vorzugsweise ist zumindest eine Schicht des Sicherheitsventils, insbesondere mehrere Schichten, aus einem Kunststoff, insbesondere folienartig, hergestellt. Die Klebeschicht, welche vorzugsweise folienartig ausgebildet ist, kann Kunststoff, insbesondere zusätzlich ein Fügemittel, bspw. Klebstoff, aufweisen. Darüber hinaus ist es denkbar, dass ein Fügemittel, insbesondere Klebstoff, an dem Zellgehäuse der Batteriezelle angeordnet ist, wobei die Klebeschicht ein weiteres Fügemittel aufweist, sodass die Klebeschicht mit dem Zellgehäuse stoffschlüssig, insbesondere mittels Klebstoff, gefügt werden kann. Auch ist es denkbar, dass das Sicherheitsventil aufgeschweißt wird, vorzugsweise durch Laserschweißen, Reibschweißen oder Ultraschallschweißen. Das Sicherheitsventil kann derart ausgebildet sein, dass im Falle einer Ausdehnung der Batteriezelle, insbesondere bei einer Ausgasung, das Sicherheitsventil ab einem vordefinierten Innendruck des Zellgehäuses ein Austreten eines Fluides aus der Batteriezelle ermöglicht. Dafür ist es denkbar, dass das Sicherheitsventil ausgebildet ist, um bei einem vordefinierten Druck innerhalb des Zellgehäuses die Öffnung des Zellgehäuses zumindest abschnittsweise freizugeben. Es ist denkbar, dass das Sicherheitsventil zumindest abschnittsweise dabei zerstört, insbesondere aufgerissen, wird, sodass ein Ausgasen der Batteriezelle ermöglicht ist. Der mehrschichtige Aufbau des Sicherheitsventils und die zumindest eine Klebeschicht können vorzugsweise als ein selbsthaftendes Pad ausgebildet sein, welches auf das Zellgehäuse aufgebracht oder in das Zellgehäuse eingebracht ist.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Batteriezelle beschrieben worden sind, selbstverständlich auch im Zusammenhang mit dem erfindungsgemäßen Batteriemodul und jeweils umgekehrt, sodass bezüglich der Offenbarung zu den einzelnen Erfindungsaspekten stets wechselseitig Bezug genommen wird bzw. werden kann.

Durch die in den abhängigen Ansprüchen aufgeführten Maßnahmen sind vorteilhafte Weiterbildungen und Verbesserungen der in den unabhängigen Ansprüchen angegebenen Erfindungsgegenstände möglich.

Vorteilhaft kann es sein, dass zumindest eine Schicht des Sicherheitsventils zumindest eine Sollbruchstelle aufweist, insbesondere kann es vorteilhaft sein, dass alle Schichten jeweils zumindest eine Sollbruchstelle aufweisen. Die Sollbruchstelle kann dabei durch konstruktive oder mechanische bzw. physikalische Maßnahmen oder Auslegungen derart ausgebildet sein, dass bei einem definierten Druck innerhalb des Zellgehäuses das Sicherheitsventil gezielt und/oder vorhersagbar versagt. Dieser Schadens- oder Überlastfall ermöglicht einen Druckabbau innerhalb der Batteriezelle, insbesondere des Zellgehäuses der Batteriezelle, wodurch ein möglicher Schaden der Batteriezelle zumindest reduziert werden kann. An der Sollbruchstelle ist zumindest eine Schicht des Sicherheitsventils derart geschwächt (beispielsweise durch Reduzierung der Materialstärke), dass zumindest die eine Schicht, insbesondere mehrere Schichten, zumindest abschnittsweise die Öffnung des Zellgehäuses freigeben. Eine konstruktiv hergestellte Sollbruchstelle kann dabei als mechanische bzw. physikalische Beeinflussung der zumindest einen Schicht des Sicherheitsventils ausgebildet sein. Dabei kann die zumindest eine Schicht, welche zumindest eine Sollbruchstelle aufweist, derart geschwächt sein, dass ab einem definierten Druck innerhalb des Zellgehäuses der Batteriezelle die Öffnung freigegeben wird, bevor eine Beschädigung des Zellgehäuses entsteht. Es ist denkbar, dass zumindest eine Schicht, insbesondere aufweisend zumindest eine Sollbruchstelle, ein zu den weiteren Schichten unterschiedlichen Werkstoff aufweist. Vorzugsweise weist zumindest die Schicht oder die Schichten mit zumindest einer Sollbruchstelle eine geringe mechanische Festigkeit an der Sollbruchstelle auf. Darüber hinaus ist es denkbar, dass die zumindest eine Schicht mit der zumindest einen Sollbruchstelle chemisch derart ausgebildet ist, dass sie bei Kontakt mit einer chemischen Substanz aus der Batteriezelle, insbesondere einem bei der Ausgasung entstehenden Gases, die Öffnung im Zellgehäuse zumindest abschnittsweise freigibt. Besonders bevorzugt ist es, wenn die Sollbruchstelle etwa 2/3 der entsprechenden Schichtdicke aufweist, wodurch eine konstruktive und mechanische Sollbruchstelle innerhalb der Schicht mit der Sollbruchstelle hergestellt sein kann. Insbesondere weist die Sollbruchstelle etwa 2/3 der als eine Folie ausgebildeten Schicht des Sicherheitsventils auf. Vorzugsweise kann die Schicht mit der Sollbruchstelle eine Kunststofffolie sein.

Es ist denkbar, dass alle Schichten jeweils zumindest eine Sollbruchstelle, insbesondere eine Mehrzahl an Sollbruchstellen, aufweisen. Dabei kann es vorteilhaft sein, wenn alle Schichten des Sicherheitsventils aus einer Kunststofffolie ausgebildet sind. Ebenfalls ist es denkbar, dass alle Schichten eine Sollbruchstelle aufweisen, welche ungefähr 2/3 der Schichtdicke, insbesondere der Foliendicke, aufweisen.

Vorteilhafterweise kann die Sollbruchstelle als Materialschwächung, insbesondere Einschnitt oder Nadelung, ausgebildet sein. Ein Einschnitt kann dabei eine 100%ige Materialschwächung sein. Vorzugsweise kann die Materialschwächung etwa 2/3 der zumindest einen Schicht, insbesondere jeder einzelnen Schicht des Sicherheitsventils, ausgebildet sein. Die Materialschwächung, insbesondere zumindest ein Einschnitt, kann erfindungsgemäß linienförmig, polygonal oder punktförmig am Sicherheitsventil ausgebildet sein. Insbesondere bei einer linienförmigen oder punktförmigen Materialschwächung, insbesondere ein Einschnitt, horizontal und/oder vertikal und/oder schräg in der zumindest einen Schicht, insbesondere in sämtlichen Schichten des Sicherheitsventils, ausgebildet sein. Eine Materialschwächung kann dabei durch Prägen und/oder Schneiden ausgebildet sein, wobei vorzugsweise die Sollbruchstelle etwa 2/3 der Schichtdicke aufweist. Die Materialschwächung kann ein gezieltes und/oder vorhersagbares Versagen der Sollbruchstelle ermöglichen, um hierdurch bspw. einen möglichen Schaden der Batteriezelle zumindest zu verringern. Die Materialschwächung kann bspw. als ein Entgasungsventil ausgebildet sein.

Vorteilhafterweise kann eine Mehrzahl an Sollbruchstellen vorgesehen sein, wobei die Sollbruchstellen schichtenweise geometrisch versetzt zueinander angeordnet sind. Dabei können die Sollbruchstellen zumindest abschnittsweise geometrisch versetzt zueinander angeordnet sein, wobei es denkbar ist, dass die Sollbruchstellen sich zumindest abschnittsweise überlagern. Bevorzugt ist es, wenn zwischen den Sollbruchstellen ein Abstand von ungefähr 0,5 mm und ungefähr 15 mm, bevorzugt zwischen ungefähr 1 mm und ungefähr 10 mm, besonders bevorzugt zwischen ungefähr 2 mm und 7 mm, vorgesehen ist. Werden die unterschiedlichen Schichten an unterschiedlichen Stellen mit Sollbruchstellen versehen, insbesondere wobei die Sollbruchstellen als Materialschwächung ausgebildet sind, so können die Schichten erst bei einem höheren Druck innerhalb des Zellgehäuses öffnen und ein Ausgasen ermöglichen.

Es ist denkbar, dass mehrere Schichten des Sicherheitsventils miteinander gefügt, insbesondere verklebt oder verschweißt, sind. Durch das Fügen der mehreren Schichten des Sicherheitsventils entsteht ein sandwichartiger Aufbau des Sicherheitsventils. Vorzugsweise weisen die mehreren Schichten des Sicherheitsventils zumindest einen Fügeabschnitt auf, wobei an den Fügeabschnitten vorzugsweise ein Fügemittel angeordnet ist. Bei dem Fügemittel kann es sich bspw. um einen Klebstoff, insbesondere einen Mehrkomponentenklebstoff, handeln. Das aus mehreren Schichten gebildete Sicherheitsventil, insbesondere in Form eines Pads, kann somit einem höheren Druck widerstehen als lose Folien bzw. Schichten eines Sicherheitsventils. Es ist denkbar, dass die Schichten des Sicherheitsventils thermisch miteinander gefügt, insbesondere verschweißt, sind. Die Schichten können erfindungsgemäß zumindest abschnittsweise miteinander gefügt sein. Die miteinander gefügten Schichten des Sicherheitsventils können somit als Verbund an der Öffnung des Zellgehäuses mit dem Zellgehäuse gefügt, insbesondere verklebt oder verschweißt, sein. Das Zellgehäuse kann vorzugsweise teilweise oder ganz aus Kunststoff oder einer Kunststofffolie ausgestaltet sein. Auch kann nur eine Wand oder ein Bereich des Zellgehäuses, vorzugsweise diejenige, an der das Sicherheitsventil angebracht werden soll, Kunststoff aufweisen. Die zumindest eine Klebeschicht des Sicherheitsventils kann geometrisch größer als die übrigen Schichten ausgebildet sein, sodass sich ein klebende Überlappung ergibt, wobei der Überlapp zum Fügen mit dem Zellgehäuse ausgebildet ist.

Vorteilhaft kann es sein, dass das Sicherheitsventil an einer Längsfläche des Zellgehäuses, insbesondere im Bereich der Zellpole der Batteriezelle, angeordnet ist. Die Anordnung an der Längsfläche der Batteriezelle bzw. des Zellgehäuses kann den Vorteil aufweisen, dass insbesondere bei einer Pouchzelle, das Sicherheitsventil größer dimensioniert sein kann. Üblicherweise weist die Längsfläche des Zellgehäuses die geringste mechanische Stabilität auf, sodass bei einem Druckaufbau innerhalb des Zellgehäuses die Längsfläche zuerst sich verformen oder sogar zerstört werden kann. Die Längsflächen des Zellgehäuses werden von den beiden Längsseiten gebildet, die eine größere Fläche aufweisen als die Querseiten bzw. Querflächen des Zellgehäuses. Vorzugsweise ist das Sicherheitsventil im Bereich der Zellpole, insbesondere an der Längsfläche des Zellgehäuses, der Batteriezelle angeordnet, wobei im Bereich der Zellpole üblicherweise der Innendruck der Batteriezelle aufgrund einer Ausgasung am größten ist. Dementsprechend kann es vorteilhaft sein, wenn das Sicherheitsventil im Bereich der Zellpole der Batteriezelle angeordnet ist, sodass ein Ausgasen aus dem Zellgehäuse der Batteriezelle zu einem Ausgasen führen kann, ohne das Zellgehäuse der Batteriezelle zu zerstören.

Es ist bevorzugt, wenn das Sicherheitsventil zwischen ungefähr 2 und ungefähr 15 Schichten, bevorzugt zwischen ungefähr 4 und ungefähr 12 Schichten, besonders bevorzugt zwischen ungefähr 6 und ungefähr 10 Schichten aufweist. Die Anzahl der Schichten des Sicherheitsventils kann insbesondere vom Innendruck der Batteriezelle abhängig sein. Eine Mehrzahl an Schichten des Sicherheitsventils kann einem höheren Druck standhalten. Es ist denkbar, dass die Schichten unterschiedliche Materialstärken aufweisen. Über die Anzahl der Schichten und/oder die Dicke der einzelnen Schichten kann somit die geometrische Dimension des Sicherheitsventils beeinflusst werden. Unterschiedliche Schichtdicken und/oder unterschiedliche Anzahl an Schichten können zu einer gezielten und vorhersagbaren Auslösung des Sicherheitsventils führen.

Vorteilhafterweise kann zumindest eine elektrolytaktivierte Indikatorschicht vorgesehen sein, wodurch eine Undichtigkeit der Batteriezelle indizierbar ist. Die elektrolytaktivierte Indikatorschicht kann dabei Aluminium aufweisen. Es kann vorteilhaft sein, wenn die elektrolytaktivierte Indikatorschicht zwischen weiteren Schichten des Sicherheitsventils angeordnet ist. Bevorzugt ist es, wenn die elektrolytaktivierte Indikatorschicht zumindest abschnittsweise von der Klebeschicht überdeckt ist. Eine elektrolytaktivierte Indikatorschicht ermöglicht es somit, insbesondere von außerhalb der Batteriezelle, eine mögliche Zerstörung und/oder chemische Reaktion innerhalb der Batteriezelle zu indizieren. Somit ist es bspw. denkbar, dass die Batteriezelle vor der Zerstörung und/oder vor einer nachteilhaften Beeinflussung von z. B. benachbarten Batteriezellen, ausgetauscht werden kann.

Es ist denkbar, dass das Sicherheitsventil kreisförmig oder oval ausgebildet ist, insbesondere einen Durchmesser zwischen ungefähr 5 mm und ungefähr 50 mm, bevorzugt zwischen ungefähr 10 mm und ungefähr 40 mm, besonders bevorzugt zwischen ungefähr 20 mm und ungefähr 30 mm, aufweist. Ein kreisförmiges oder oval ausgebildetes Sicherheitsventil kann dabei vorteilhaft gegenüber bspw. rechteckig ausgebildeten Sicherheitsventilen sein, da keine Kanten oder Ecken vorhanden sind, die ein Ablösen des Sicherheitsventils von dem Zellgehäuse negativ beeinflussen könnten.

Gemäß einem weiteren Aspekt der Erfindung ist ein Batteriemodul beansprucht, wobei das Batteriemodul zumindest eine erfindungsgemäße Batteriezelle aufweist. Somit ergeben sich bei dem erfindungsgemäßen Batteriemodul sämtliche Vorteile, wie sie bereits im Zusammenhang mit der erfindungsgemäßen Batteriezelle beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder der Zeichnungen hervorgehende Merkmale und/oder Vorteile, einschließlich konstruktiver Einzelheiten und räumliche Anordnungen, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

In den nachfolgenden Figuren werden für die gleichen technischen Merkmale auch von unterschiedlichen Ausführungsbeispielen die identischen Bezugszeichen verwendet. Es zeigen:
- Figur 1: eine mögliche Ausführungsform einer erfindungsgemäßen Batteriezelle,
- Figur 2a: Explosionsdarstellung einer möglichen Ausführungsform eines erfindungsgemäßen Sicherheitsventils,
- Figur 2b: ein zusammengesetztes Sicherheitsventil gemäß der Figur 2a,
- Figur 3a: eine Explosionsdarstellung eines weiteren Ausführungsbeispiels eines erfindungsgemäßen Sicherheitsventils,
- Figur 3b: ein zusammengesetztes Sicherheitsventil, wie es in Figur 3a gezeigt ist.

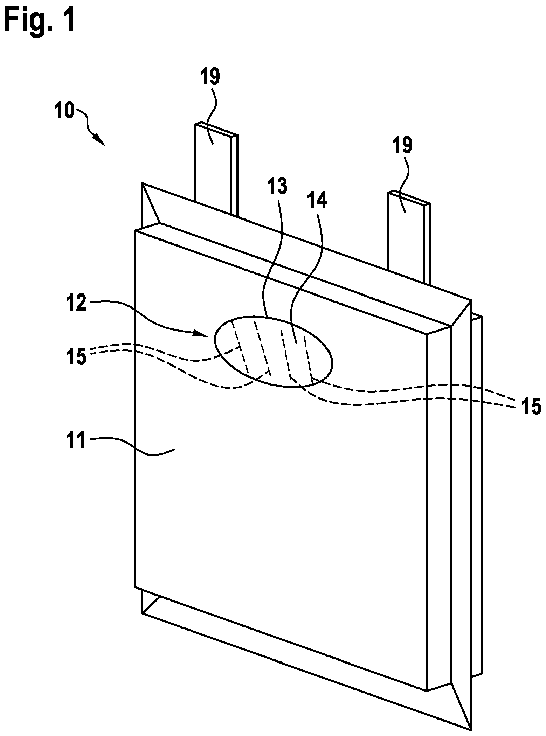

In Fig. 1 ist eine mögliche Ausführungsform einer erfindungsgemäßen Batteriezelle 10 gezeigt, wobei die Batteriezelle 10 in Fig. 1 als Pouchzelle 10 ausgebildet ist und ein Zellgehäuse 11 aufweist. Das Zellgehäuse 11 der Pouchzelle 10 ist dabei als eine Folie 11 ausgebildet. An dem Zellgehäuse 11, welche als Pouchfolie 11 ausgebildet ist, ist ein Sicherheitsventil 13 angeordnet, wobei das Sicherheitsventil 13 die Öffnung 12 der Batteriezelle 10 vollflächig verschließt. Das Sicherheitsventil 13 ist hierbei mehrschichtig ausgebildet und weist zumindest eine Klebeschicht 14 auf, wodurch das Sicherheitsventil 13 am Zellgehäuse 11 stoffschlüssig befestigt ist. Das Sicherheitsventil 13 weist eine Mehrzahl an Sollbruchstellen 15 auf, wobei die Sollbruchstellen 15 versetzt zueinander und linienförmig in dem Sicherheitsventil 13 ausgebildet sind. Die Sollbruchstellen 15 können dabei als Materialschwächung, insbesondere Einschnitte, ausgebildet sein. Das Sicherheitsventil 13 ist dabei an der Öffnung 12 des Zellgehäuses 11 angeordnet, wobei die Öffnung 12 und somit das Sicherheitsventil 13 in einem oberen Bereich an der Längsfläche des Zellgehäuses 11 angeordnet ist. Dieser obere Bereich befindet sich in einem Bereich der Batteriezelle 10 und somit des Zellgehäuses 11, welcher die Zellpole 19 aufweist.

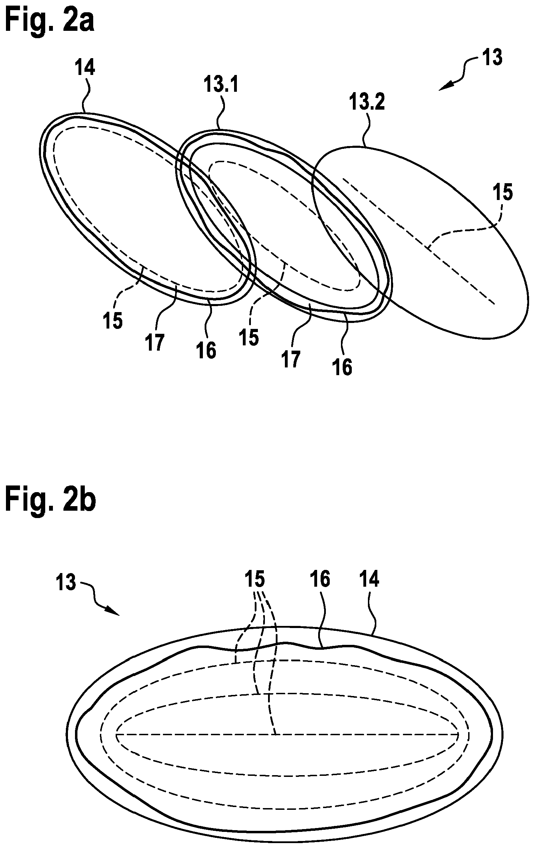

In Fig. 2a ist eine erste mögliche Ausführungsform eines erfindungsgemäßen Sicherheitsventils 13 gezeigt. Das Sicherheitsventil 13 ist hierbei mehrschichtig ausgebildet und weist zumindest eine erste Schicht 13.1 auf, wobei die Schicht 13.1 zwischen der Klebeschicht 14 und einer weiteren Schicht 13.2 angeordnet ist. Die Klebeschicht 14 weist in Fig. 2a eine Sollbruchstelle 15 auf, wobei die Sollbruchstelle 15 oval ausgebildet ist. Die Klebeschicht 14 weist in Fig. 2a darüber hinaus einen Fügeabschnitt 17 auf, wobei in dem Fügeabschnitt 17 ein Fügemittel 16 angeordnet ist, sodass die Klebeschicht 14 mit der Schicht 13.1 und/oder mit einem Zellgehäuse 11 der Batteriezelle 10 gefügt, insbesondere verklebt werden kann. Das oval ausgebildete Sicherheitsventil 13 weist in Fig. 2a insgesamt drei Schichten 14, 13.1 und 13.2 auf. Jede der Schichten 14, 13.1 und 13.2 weist jeweils Sollbruchstellen 15 auf, wobei die Sollbruchstellen 15 schichtenweise geometrisch versetzt zueinander angeordnet sind. Die mittig angeordnete Schicht 13.1 des Sicherheitsventils 13 verfügt ebenfalls über einen Fügeabschnitt 17, in welchem ein Fügemittel 16 zum Fügen insbesondere der Schichten 14 und 13.2 mit der Schicht 13.1 ermöglicht ist. Die Sollbruchstelle 15 der Schicht 13.2 ist dabei linienförmig ausgebildet.

Fig. 2b zeigt das Sicherheitsventil 13 aus Fig. 2, wobei die Schichten 13.1, 13.2 und 14 in Fig. 2b miteinander zu dem Sicherheitsventil 13 gefügt sind. Dabei weist die äußerste Schicht 14 einen Fügeabschnitt 17 auf, in welchem ein Fügemittel 16 angeordnet ist, sodass das Sicherheitsventil 13 mit dem Fügeabschnitt 17 an einem Zellgehäuse 11 einer Batteriezelle 10 derart angeordnet werden kann, dass eine Öffnung 12 im Zellgehäuse 11 durch das Sicherheitsventil 13 vollflächig verschlossen werden kann.

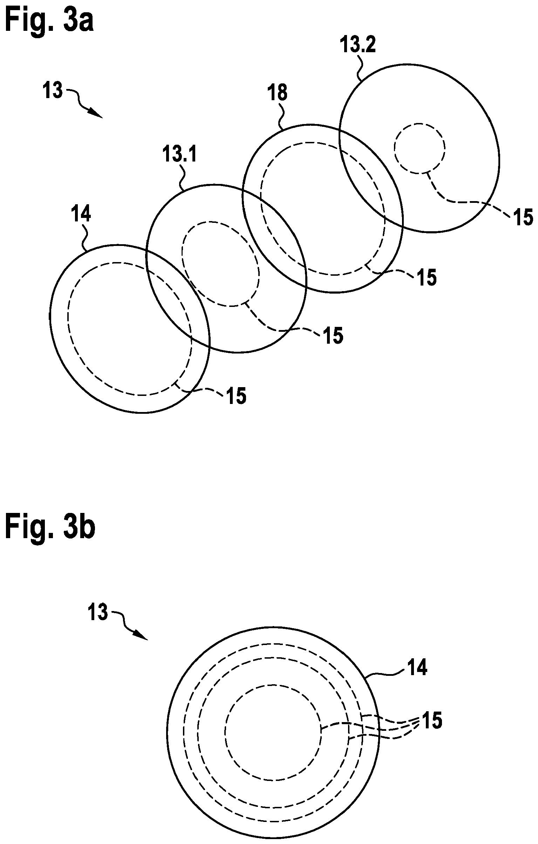

Fig. 3a zeigt eine weitere mögliche Ausführungsform eines erfindungsgemäßen Sicherheitsventils 13. In Fig. 3a weist das Sicherheitsventil 13 insgesamt vier Schichten 14, 13.1, 18 und 13.2 auf. Die Klebeschicht 14 bildet dabei eine äußerste Schicht 14 des Sicherheitsventils 13 und weist eine Sollbruchstelle 15 auf, welche kreisförmig in der Klebeschicht 14 ausgebildet ist. Zwischen der Klebeschicht 14 und der elektrolytaktivierten Indikatorschicht 18 ist eine weitere Schicht 13.1 angeordnet. Die weitere Schicht 13.1 weist ebenfalls eine Sollbruchstelle 15 auf, welche kreisförmig und kleiner dimensioniert als die Sollbruchstelle 15 der Klebeschicht 14 und der Sollbruchstelle 15 der elektrolytaktivierten Indikatorschicht 18 ausgebildet ist. Die elektrolytaktivierte Indikatorschicht 18 ist zwischen der Schicht 13.1 und der Schicht 13.2 angeordnet. Vorteilhaft ist es, wenn die elektrolytaktivierte Indikatorschicht 18 Aluminium aufweist.

Die Fig. 3b zeigt das Sicherheitsventil 13 der Fig. 3a, wobei die Schichten des Sicherheitsventils 13 in Fig. 3b miteinander gefügt sind. Die äußerste Schicht des Sicherheitsventils 13 bildet dabei die Klebeschicht 14, wodurch das Sicherheitsventil 13 am Zellgehäuse 11 einer Batteriezelle 10 stoffschlüssig befestigbar ist. In Fig. 3b sind darüber hinaus die lagenweise geometrisch versetzt zueinander angeordneten Sollbruchstellen 15 des Sicherheitsventils 13 zu erkennen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Batteriezelle (10), insbesondere Pouchzelle (10), mit einem Zellgehäuse (11) und zumindest einem an einer Öffnung (12) des Zellgehäuses (11) angeordneten Sicherheitsventil (13), wobei das Sicherheitsventil (13) die Öffnung (12) vollflächig verschließt,
**dadurch gekennzeichnet,**
**dass** das Sicherheitsventil (13) mehrschichtig ausgebildet ist und zumindest eine Klebeschicht (14) aufweist, wodurch das Sicherheitsventil (13) am Zellgehäuse (11) stoffschlüssig befestigt ist.

2. Batteriezelle (10) nach dem vorhergehenden Anspruch,
**dadurch gekennzeichnet,**
**dass** zumindest eine Schicht (13.1, 13.2, 14) des Sicherheitsventils (13) zumindest eine Sollbruchstelle (15) aufweist, insbesondere alle Schichten (13.1, 13.2, 14) jeweils zumindest eine Sollbruchstelle (15) aufweisen.

3. Batteriezelle (10) nach einem der vorhergehenden Ansprüche,
**dadurch gekennzeichnet,**
**dass** die Sollbruchstelle (15) als Materialschwächung (15), insbesondere Einschnitt (15), ausgebildet ist.

4. Batteriezelle (10) nach einem der vorhergehenden Ansprüche,
**dadurch gekennzeichnet,**
**dass** die Sollbruchstellen (15) lagenweise geometrisch versetzt zueinander angeordnet sind.

5. Batteriezelle (10) nach einem der vorhergehenden Ansprüche,
**dadurch gekennzeichnet,**
**dass** mehrere Schichten (13.1, 13.2, 14) des Sicherheitsventils (13) miteinander gefügt, insbesondere verklebt oder verschweißt, sind.

6. Batteriezelle (10) nach einem der vorhergehenden Ansprüche,
**dadurch gekennzeichnet,**
**dass** das Sicherheitsventil (13) an einer Längsfläche des Zellgehäuses (11), insbesondere im Bereich der Zellpole (19.1) der Batteriezelle (10), angeordnet ist.

7. Batteriezelle (10) nach einem der vorhergehenden Ansprüche,
**dadurch gekennzeichnet,**
**dass** das Sicherheitsventil (13) zwischen ungefähr 2 und ungefähr 15 Schichten (13.1, 13.2, 14), bevorzugt zwischen ungefähr 4 und ungefähr 12 Schichten (113.1, 13.2, 14), besonderes bevorzugt zwischen ungefähr 6 und ungefähr 10 Schichten (13.1, 13.2, 14) aufweist.

8. Batteriezelle (10) nach einem der vorhergehenden Ansprüche,
**dadurch gekennzeichnet,**
**dass** zumindest eine elektrolytaktivierte Indikatorschicht (18) vorgesehen ist, wodurch eine Undichtigkeit der Batteriezelle (10) indizierbar ist.

9. Batteriezelle (10) nach einem der vorhergehenden Ansprüche,
**dadurch gekennzeichnet,**
**dass** das Sicherheitsventil (13) kreisförmig oder oval ausgebildet ist, insbesondere einen Durchmesser zwischen ungefähr 5 mm und ungefähr 50 mm, bevorzugt zwischen ungefähr 10 mm und ungefähr 40 mm, besonders bevorzugt zwischen ungefähr 20 mm und ungefähr 30 mm aufweist.

10. Batteriemodul mit zumindest einer Batteriezelle (10) gemäß einem der vorhergehenden Ansprüche.
